# EUROPEAN PATENT APPLICATION

(11) **EP 1 452 902 A1**
(43) Date of publication of application: **01.09.2004**
(21) Application number: 04250692.3
(22) Date of filing: 09.02.2004
(51) Int. Cl.: G02B 27/20

(54) **Visible pointer tracking with separately detectable pointer tracking signal**

(30) Priority: 28.02.2003 US 376828
(71) Applicant: Hewlett-Packard Development Company, L.P., Houston, TX 77070 (US)
(72) Inventor: Pate, Michael A., Corvallis, OR 97330 (US); Weng, Jian-gang, Corvallis, OR 97330 (US)
(74) Representative: Jackson, Richard Eric

(57) **Abstract**

The invention concerns pointer tracking using a signal possessing an optical characteristic that is separately detectable from a projected display. An area of the projected display is sensed. Sensing is conducted with filtering for the separately detected optical characteristic.

## Description

### FIELD OF THE INVENTION

The invention is in the field of presentations and presentation equipment. An additional field of the invention is visible pointing devices, e.g., laser pointers.

### BACKGROUND OF THE INVENTION

Presentations are aided by the projection of images onto a surface for display to multiple persons. In academic settings, business settings, courtroom settings, seminar settings and other settings, a presenter or presenters often find it desirable to display a projected display image. Pointers, e.g., laser pointers, permit a presenter to indicate a general area of a displayed image and draw attention thereto. The pointing lasts as long as the presenter maintains the pointer over the general area of interest. Other options for drawing attention to a displayed image include a presenter's interaction with a computer being used to generate the projected display image by a way of a connection to a display engine. Use of a computer during a presentation is cumbersome unless a presenter is seated and stationary. This can detract from a presentation.

Attention has recently been devoted to pointer tracking and interaction systems. In such systems, a camera is typically used to record images. The images are analyzed for a pointer within the image. Information about the pointer might then be used to interact with and modify the image being displayed. A major difficulty in these tracking and interaction systems, though, is the ability to reliably recognize the pointer in the image being analyzed. Many environmental conditions and particular display conditions result in a poor contrast between the pointer spot and presentation content or video, and adversely affect the ability to recognize and track a pointer in a sensed display image. Complex image analysis techniques might be more successful, but such processes are often computationally expensive. In commercial presentation systems, there is a need to keep the hardware relatively inexpensive. In addition, a system that is either prone to failures to recognize a pointer or is slow to recognize pointers will prove ineffective as a presentation aid.

### SUMMARY OF THE INVENTION

The invention concerns pointer tracking using a signal possessing an optical characteristic that is separately detectable from a projected display. An area of the projected display is sensed. Sensing is conducted with filtering for the separately detected optical characteristic.

### BRIEF DESCRIPTION OF THE DRAWINGS

FIG. 1 is a block diagram illustrating a preferred embodiment display and pointer tracking system of the invention;
FIG. 2 is a block diagram illustrating a preferred embodiment display and sensing unit;
FIG. 3 is a block diagram of a preferred method of pointer tracking;
FIG. 4 is a block diagram of a preferred embodiment pointer;
FIG. 5 is a block diagram illustrating an alternate embodiment display and sensing unit;
FIG. 6 shows an example test pattern used in a preferred field of view calibration procedure of the invention.

### DETAILED DESCRIPTION OF THE INVENTION

The invention is directed to pointer tracking using a signal possessing an optical characteristic that is separately detectable from a projected display. In preferred embodiments, the optical characteristic is one not possessed by a displayed image and therefore unmistakable as being part of the displayed image. High contrast between the displayed image and pointer tracking signal is thereby realized. For example, in preferred embodiments a visible pointer is provided with a non-visible spectrum source that aligns emissions with visible pointer emissions. Emissions of the non-visible spectrum source can readily be detected by an image sensor. Accordingly, a signal indicating the location of a pointer on a displayed image can be detected separately from visible images, which may be considered noise when the objective is determining a pointer location in a sensed image.

Pointer is used generally herein to mean an indication, and not necessarily a small round point. Visible pointers and pointer tracking signals used in the invention may use points, or may use more complex patterns of emission. Preferred examples include visible pointers that represent complex patterns indicating arrows, logos, or brands.

The invention will now be illustrated with respect to preferred embodiment devices. Methods of the invention will also be apparent from the following discussion. In describing the invention, particular exemplary devices will be used for purposes of illustration. Illustrated devices may be schematically presented, and exaggerated for purposes of illustration and understanding of the invention.

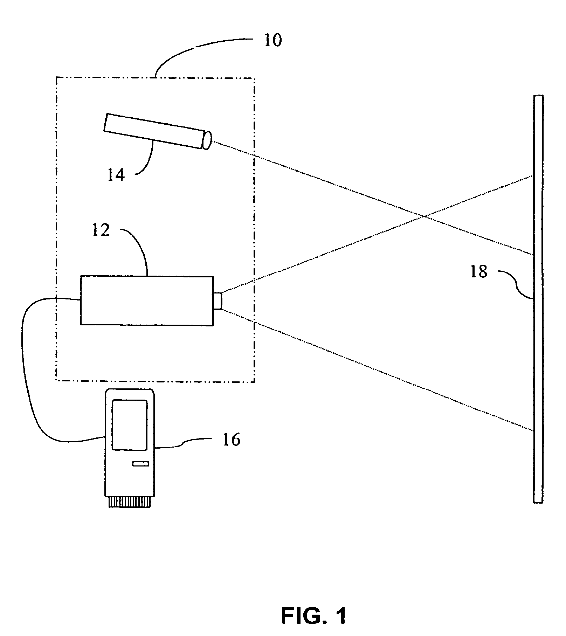

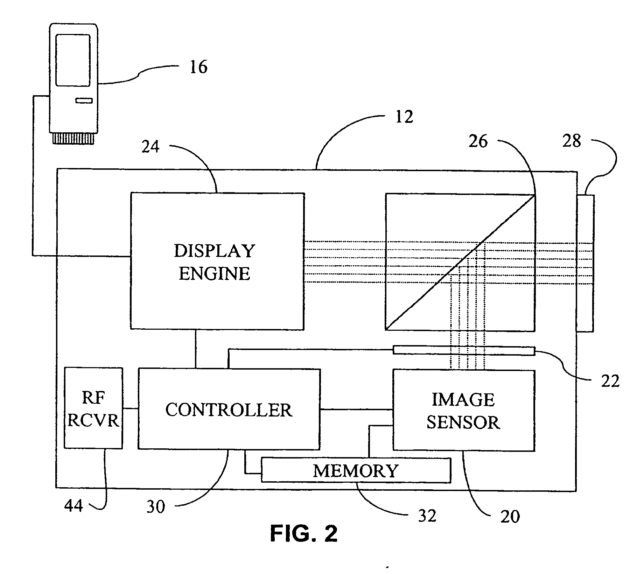

In FIG. 1, a preferred display and pointer tracking system is shown generally at 10. System 10 includes a projecting and sensing unit 12 and a pointer 14. The projecting and sensing unit 12 displays images, such as images provided by an associated processor 16, onto a display surface 18. The display surface 18 may be a screen, such as is typically employed in combination with a projection system, but any surface that is sufficiently reflective to provide a discernable image is suitable (including for example, a wall, etc.). The pointer 14 can project a visible light beam onto the display surface 18 under the control of an operator. The pointer 14 projects, with the visible light beam, a pointer tracking signal that may be separately detected by an image sensor 20, shown in FIG. 2. Images projected by the projecting and sensing unit 12 may include still images or video images and, for consistency, will be referred to herein generally as display images. The image sensor 20 preferably images the entire area of the display images and at least detects the pointer tracking signal.

At least during periods of detection of the pointer tracking signal, the display image itself is preferably filtered from the image sensor 20. In an exemplary embodiment, the pointer 14 emits a pointer tracking signal having a wavelength outside of a range of wavelengths utilized by projected display images. Preferably, the pointer tracking signal is outside of the visible range, e.g., near infrared (NIR). A filter may comprise an inherent characteristic of the image sensor itself, i.e., the image sensor 20 may have a sensing range that encompasses only the range of wavelengths used by the pointer tracking signal. Preferably, however, the image sensor 20 has a detection range encompassing both the pointer tracking signal and display images. That way, the image sensor 20 may be used for storage of sensed display images as well as for sensing the pointer tracking signal. A preferred image sensor is a CCD array. An advantage of the CCD array is that it has high sensitivity in the range of non-visible wavelengths exceeding about 980nm. It is advantageous to match the pointer tracking signal emitted by the pointer 14 to the peak sensitivity of the image sensor 20. Accordingly, a preferred range of emissions for the pointer tracking signal is in the range of ~ 980 - ~1100nm, a range encompassing peak sensitivity of typical CCD sensing devices.

When the image sensor 20 is used for obtaining data indicating display images and for detecting the pointer tracking signal, a separate filter 22 is preferably disposed on an optical path that leads to the image sensor 20. FIG. 2 shows a preferred embodiment where a display engine 24 used to project display images from a processor 16, e.g., a computer such as a laptop including a slide show stored thereon, through a beam splitter 26, which may be realized, e.g., by a cube or dichroic beam splitter filter. The display images are focused by a lens 28. The lens 28 also serves as a common lens for the image sensor 20. Sensed images are delivered to the image sensor 20 through the lens 28 and the filter 22. The filter 22 is preferably selectively activated, for example, by a controller 30 that also serves to control the image sensor 20. The filter 22 may be any suitable wavelength filter, and may be electrically or mechanically controlled. The electrical or mechanical activation is responsive to commands from the controiier 30. in an alternate embodiment, the filter comprises a continuously rotating filter applied as in FIG. 2, or applied to the lens 28. The rotating filter has a duty cycle, a portion of which filters out the sensed display images, and a portion of which passes sensed display images. The controller 22 uses the active filter portion of the duty cycle for pointer tracking functions.

In alternate embodiments, the pointer tracking signal is distinguished by an optical characteristic other than wavelength. One example is intensity. A pointer tracking signal having an intensity sufficiently outside a range of intensities utilized by display images may be reliably detected by the image sensor 20 and recognized by controller 30 after filtering, such as by a filter 22 set to filter on an intensity threshold, or an electronic filtering conducted by the controller 30 based upon an image sensed by the image sensor 20. This embodiment may have more limited appeal than the wavelength embodiments, particularly the preferred embodiments using a non-visible pointer tracking signal. A highly intense signal may be obtrusive when used as a pointer in a presentation. Another exemplary embodiment is a pointer tracking signal that is modulated in a range of modulation outside of that in display images. Modulation frequencies for the pointer tracking signal may be set such that the modulation frequency is outside the range of display images, and also largely unnoticeable by a human observer. Filtering is then conducted based upon frequency.

The common lens 28 is used in FIG. 2 to simplify the desired result of the image sensor 20 having a substantially identical field of view to that of the display engine 24. A substantially identical field of view aids greatly in the ability to make intelligent use of the pointer tracking signal, as location of a pointer tracking signal relative to a display image may be more easily determined. One preferred use of pointer tracking is for the processor 30 to store overlay data in a memory 32. The overlay data is basically a stored version of a sensed display image frame or slide, with pointer tracking data and any modified display data stored in a manner that an original image provided by the processor 16 may be supplemented with overlay data related to a presentation conducted with use of the invention.

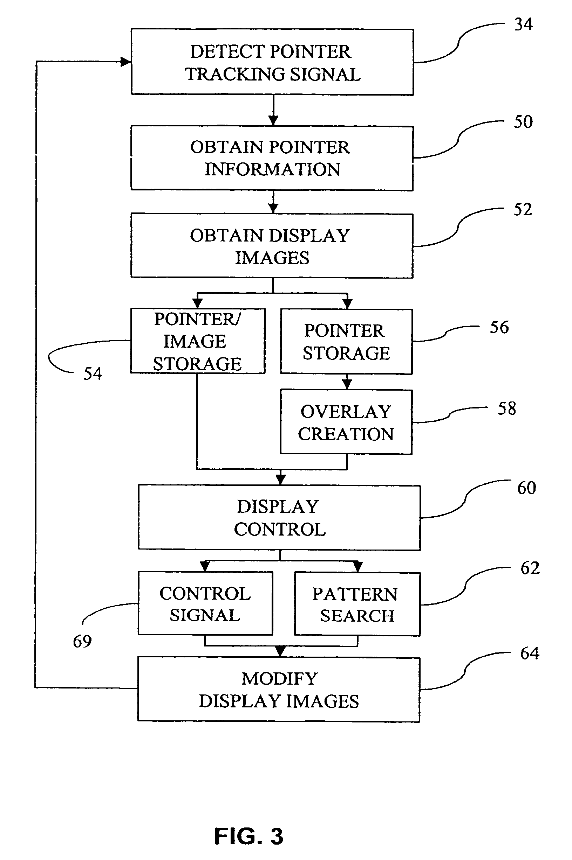

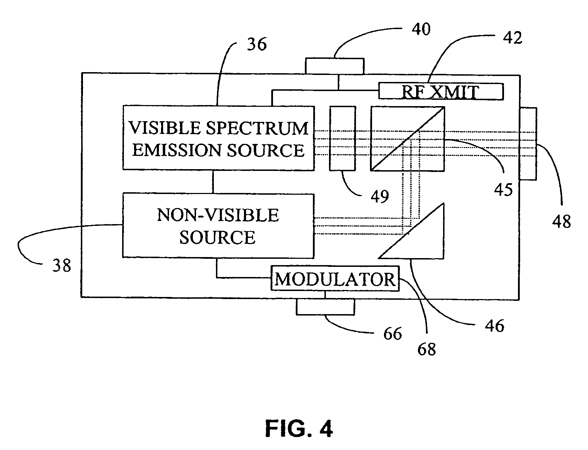

More particularly, with reference to FiG. 3, a preferred method for pointer tracking is illustrated. The pointer tracking method is initiated by detection of a pointer tracking signal (step 34). This step may be conducted, for example, by the controller 30 checking images sensed by the image sensor 20. An alternative is for the use of a separate signal to indicate activation of the pointer 14. FIG. 4 shows a block diagram of a preferred pointer. The pointer includes a conventional visible spectrum source 36. This may be a red diode laser having a 670 nm wavelength, for example. The visible spectrum source 36 may also be realized through one or more diode lasers of different visible emission wavelengths, or may employ one or more alternative illumination sources configured to project a light beam onto the projected image. A non-visible spectrum source 38 produces the pointer tracking signal. When an operator activates the visible spectrum source 36, for example by pressing an operator interface such as a button 40, the non-visible spectrum source 38 also activates. The pressing of the button 40 can also be used to activate a signaling device, such as a wireless radio frequency transmitter 42. A receiver (FIG. 2) 44 receives the signal of the transmitter 42 as an indication that the pointer is being used. The controller 30 may then begin the step 34 of detecting the pointer tracking signal.

Optics to direct the pointer signal of the visible spectrum source 36 and the pointer tracking signal of the non-visible spectrum source include a dichroic beam combiner 45 that is highly transmissive to the wavelengths of the visible spectrum source 36 and highly reflective to the wavelengths of the non-visible spectrum source. A mirror 46 directs the emissions of the non-visible spectrum source 38 toward the beam combiner 45. The beam combiner 45 preferably bore sights the pointer signal and the pointer tracking signal on an identical optical path, but the pointer tracker signal and pointer must at least be emitted in alignment so that the pointer location can be determined based upon the pointer tracker signal of the non-visible spectrum source 38. The pointer and pointer tracking signal exit via a cover or window 48.

At some point along the optical path, the pointer signal of the visible spectrum source 36 may be patterned to produce a spot that strikes the display surface 18. FIG. 4 shows a grating 49 to pattern the pointer signal of the visible spectrum source. The spot may have any size, shape, or color. Preferred examples include spots that are logos.

Once detecting (step 34) begins, the controller 30 may commence any number of useful pointer tracking and interaction methods. Tracking is addressed first. Referring again to FIG. 3, it is useful, for example, to obtain pointer information (step 50), such as the position of a pointer tracking signal (and by inference the pointer) relative to a display image, a path traced by the pointer tracking signal relative to a display image, and/or the activation/deactivation of the pointer tracking signal. Pointer information is gathered from the image sensor 20 during filtering periods, and the controller 30 also may obtain sensed images of display images (step 52). The pointer information and display images may be stored together in memory (step 54), for example to memorialize aspects of a presentation. Another alternative is for the controller to store only the pointer information (step 56). The pointer information may be associated with display images. For example, the controller 30, perhaps cooperating with software resident on the processor 16, can create and associate a set of overlays (step 58) with a display image presentation. The overlays may be used to re-create the pointer information obtained when a presentation was presented and pointer information stored.

Display control (step 60) may also be based upon the pointer information obtained through the image sensor 20 by the controller. The controller 30 may, for example, search for interpretable patterns (step 62) in pointer information. In response to recognition of an interpretable pattern, the controller may cause a modification in the display image (step 64) being projected by the display engine 24. This enables an operator using the pointer 14 to interact with a presentation by permitting the operator to modify the display images of the presentation. By tracing a pattern using the pointer, the operator may call up a pre-defined command, such as the commands typically available in presentation software. The traced pattern may include one or more lines, curves, or other motions of the projected light spot forming a pattern that may be matched to a predefined stroke pattern. A predefined stroke pattern may include a series of one or more sequential strokes that have been associated with a command for either the projecting and sensing unit 12, or software resident on the associated processor 16 and being used to present display images through the projecting and sensing unit 12.

Control of the display images through use of the pointer 14 may also be enabled by an additional preferred feature of the pointer that modifies the non-visible signal upon activation of an additional button 66. In the preferred embodiment of FIG. 4, the additional button 66 controls a modulator 68 that modulates the non-visible spectrum source 38. Button 66 and button 40 may be laid out in the traditional fashion of a mouse, i.e., as right and left mouse buttons. Activation of the button 66 then produces a modulated pointer tracking signal, which can be detected by the controller 30 and interpreted as a control signal (step 69). Advantageously, this permits an operator to use the pointer 14 like a mouse, and the traditional functions of many common types of software being used in the processor 16 may be fully utilized in a familiar fashion while the graphical user interface of the software is presented as a display image through the display engine 24. The controller 30 can interpret the modulated and unmodulated signals as mouse commands and present them to a mouse port of the processor 16, for example. The controller 30 can thus cause a change in the display image by activating mouse-controlled features of software being used to generate display images.

Display control (step 60) conducted by controller 30 in response to either interpretable patterns or modulated pointer tracking signals may also modify the display images through control of the display engine 24 or the lens 28. Typical functions, e.g., focus, brightness, standby, etc., may be controlled then through the use of the pointer 14.

Artisans will appreciate that the controller 30 may be realized as hardware, firmware, or a programmed general processing computer. Though the preferred embodiment includes a controller 30 in the projecting and sensing unit 12, the controller might also be realized externally to the projecting and sensing unit, for example software resident in the processor 16. Pointer tracking functions of the projecting and sensing unit 12 would then be available only when a processor including functions of the controller 30 is used with the projecting and sensing unit 12.

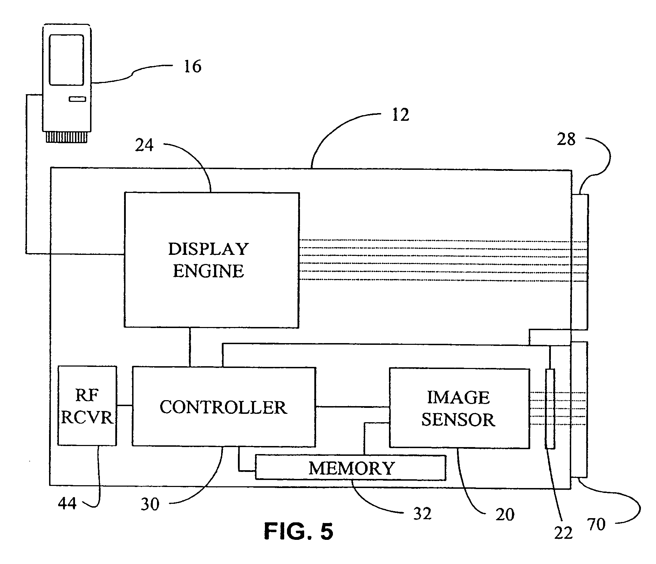

The image sensor 20 may also be separated from the display engine 24, but this introduces the need to calibrate the field of view seen by the image sensor 20 to that displayed by the display engine 24. The same need arises in the FIG. 5 embodiment, where the image sensor 20 uses a lens 70 separate from the lens 28. Having the lenses 28 and 70 fixed in the same plane simplifies obtaining a substantially identical field of view for the image sensor 20 the display engine 24. If the lenses 28 and 70 are also optically identical, calibration may be conducted by the processor 30 controlling the lens 70 to have the same focus and zoom settings as the lens 28. Without common lens properties, common control of the lenses, and lenses disposed in a common plane, a calibration procedure should be conducted.

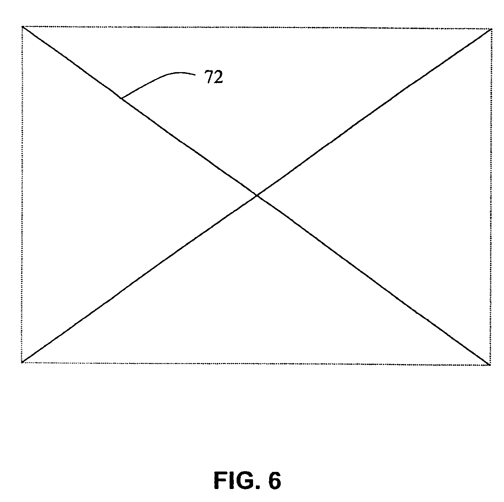

A preferred calibration procedure uses the display engine 24 to display a test pattern. For example, the test pattern could comprise any pattern that is sufficient to indicate the border of the display images that will be displayed by the display engine. A common rectangular display image could have a test pattern, for example, of intersecting lines 72 (see FIG. 6), from which the boundaries of the display image can be determined. Using the test pattern detected by the image sensor 20, the processor then controls the lens 70 to scale the field of view of the image sensor 20 to that indicated by the test pattern.

Calibration may also be conducted without participation of the display engine 24. For example, an operator may use the pointer 14 to conduct a calibration procedure once a display image is produced by the display engine 14. The pointer can point to various points upon the display image, which are then detected using the image sensor 20. The controller 30 then controls the lens 70 to scale the field of view of the image sensor 20.

While specific embodiments of the present invention have been shown and described, it should be understood that other modifications, substitutions and alternatives are apparent to one of ordinary skill in the art. Such modifications, substitutions and alternatives can be made without departing from the spirit and scope of the invention, which should be determined from the appended claims.

Various features of the invention are set forth in the appended claims.

## Claims

1. A pointer device (14), comprising:
a visible spectrum source (36) to produce visible emissions;
a non-visible spectrum source (38) to produce emissions outside the visible spectrum;
optics (45, 46) for outputting, in alignment, said visible emissions and said emissions outside the visible spectrum.

2. The device according to claim 1, wherein said optics bore sight said visible emissions with said emissions outside the visible spectrum.

3. A pointer tracking system (10) comprising:
a pointer device according to claim 1, further comprising:
an image sensor (20) having a sensing range encompassing said emissions outside the visible spectrum.

4. The pointer device according to claim 1, further comprising a modulator (68) to modulate said non-visible spectrum source.

5. A display system comprising:
a pointer device according to claim 1, the display system further comprising:
display engine (24) for projecting display images onto a surface;
an image sensor (20) capable of imaging an area of display of said display engine and sensing the visible spectrum and said emissions outside the visible spectrum;
a filter (22) disposed between said area of said display and said image sensor to selectively distinguish between the visible spectrum and said emissions outside the visible spectrum;
a memory (32) for storing images received by said image sensor; and
a controller (30) for controlling displays by said display engine and images stored by said memory in view of emissions of said non-visible spectrum source.

6. The display system according to claim 5, wherein said controller stores unmodulated emissions from said non-visible spectrum source as data with images of projected display images and interprets modulated emissions from said non-visible spectrum source as commands for controlling said display engine.

7. The display system according to claim 5, wherein said controller monitors images sensed by said image sensor and determines whether emissions of said non-visible spectrum source trace an interpretable pattern.

8. A method of detecting a pointer signal used with a projected display, the method comprising steps of:
providing a pointer tracking signal possessing an optical characteristic that is separately detectable from the projected display; and
sensing an area of the projected display while filtering for said optical characteristic.

9. The method of detecting according to claim 8, wherein said filtering is conducted via an inherent characteristic of an image sensor used to conduct said step of sensing.

10. The method of detecting according to claim 8, wherein said filtering is conducted via a filter disposed between the display and an image sensor used to conduct said step of sensing.
